Europäisches Patentamt

European Patent Office

Office européen des brevets

(19)

(11) Numéro de publication: **0 190 805**
**B1**

(12) **FASCICULE DE BREVET EUROPEEN**

(45) Date de publication du fascicule du brevet:
**08.11.89**

(51) Int. Cl.⁴: **G 01 S 7/52, G 01 S 7/62,**
**G 01 S 15/02**

(21) Numéro de dépôt: **86200159.1**

(22) Date de dépôt: **05.02.86**

(54) Appareil d'exploration de milieux par échographie ultrasonore.

(30) Priorité: **08.02.85 FR 8501790**

(43) Date de publication de la demande:
**13.08.86 Bulletin 86/33**

(45) Mention de la délivrance du brevet:
**08.11.89 Bulletin 89/45**

(84) Etats contractants désignés:
**DE FR GB**

(56) Documents cités:
**EP-A- 0 106 409**
**FR-A- 2 512 988**
**US-A- 4 228 804**

JOURNAL OF THE ACOUSTICAL SOCIETY OF
AMERICA, vol. 76, no. 3, septembre 1984, pages
949-950, Acoustical Society of America, New York, US;
G. XIU-FEN et al.: "Ultrasonic investigation of the
nonlinearity parameter B/A in biological media"
JOURNAL OF THE ACOUSTICAL SOCIETY OF
AMERICA, vol. 73, no. 5, mai 1983, pages 1525-1531,
Acoustical Society of America, New York, US; W.N.
COBB: "Finite amplitude method for the determination
of the acoustic nonlinearity parameter B/A"

(73) Titulaire: **LABORATOIRES D'ELECTRONIQUE ET DE
PHYSIQUE APPLIQUEE L.E.P., 3, Avenue Descartes,
F-94450 Limeil-Brévannes (FR)**
(84) Etats contractants désignés: **FR**

(73) Titulaire: **N.V. Philips' Gloeilampenfabrieken,
Groenewoudseweg 1, NL-5621 BA Eindhoven (NL)**
(84) Etats contractants désignés: **DE GB**

(72) Inventeur: **Nicolas, Jean-Marie, Société Civile
S.P.I.D. 209 Rue de l'Université, F-75007 Paris (FR)**
Inventeur: **Pesque, Patrick, Société Civile
S.P.I.D. 209 Rue de l'Université, F-75007 Paris (FR)**

(74) Mandataire: **Landousy, Christian et al, Société Civile
S.P.I.D. 209, Rue de l'Université, F-75007 Paris (FR)**

(56) Documents cités: (suite)
JOURNAL OF THE ACOUSTICAL SOCIETY OF
AMERICA, vol. 69, no. 4, avril 1981, pages 1210-1212,
Acoustical Society of America, New York, US; W.K. LAW
et al.: "Ultrasonic determination of the nonlinearity
parameter B/A for biological media"

Le dossier contient des informations techniques
présentées postérieurement au dépôt de la demande et
ne figurant pas dans le présent fascicule.

## Description

La présente invention concerne un appareil d'exploration de milieux et notamment de tissus biologiques par échographie ultrasonore, comprenant:

(a) un transducteur ultrasonore destiné à émettre des signaux ultrasonores en réponse à des signaux d'excitation dudit transducteur et à recevoir les échos ultrasonores engendrés par les obstacles rencontrés par lesdits signaux ultrasonores dans leur direction de propagation;

(b) un étage d'émission répétée desdits signaux d'excitation, le spectre de ces signaux comprenant une fréquence prédéterminée $f_o$;

(c) un étage de réception et de traitement des signaux de sortie électriques du transducteur engendrés par celui-ci en réponse aux échos ultrasonores reçus, ledit étage comprenant:

(i) un circuit d'amplification et de contrôle de gain placé en sortie du transducteur ultrasonore;

(ii) en sortie dudit circuit, une première voie de traitement comprenant elle-même un premier détecteur d'enveloppe et un premier dispositif de visualisation;

(iii) également en sortie dudit circuit, une deuxième voie de traitement comprenant elle-même un filtre passe-bande et un deuxième détecteur d'enveloppe.

Cet appareil est utilisable notamment dans le domaine médical pour l'examen échographique de tissus biologiques, ou encore dans le domaine du contrôle non destructif de matériaux.

La demande de brevet français publiée sous le n° 2 514 910 décrit un appareil de ce type. Cet appareil connu est destiné à permettre l'obtention d'informations quantitatives sur les variations du coefficient différentiel d'atténuation ultrasonore dans les milieux explorés, cette obtention étant réalisée par évaluation locale d'un paramètre qui est en relation directe avec la valeur dudit coefficient différentiel.

Le but de l'invention est de proposer un appareil tel que défini dans le préambule et permettant également d'obtenir des informations quantitatives sur la nature des milieux explorés, mais de façon différente, par une détermination du paramètre de non-linéarité acoustique du second ordre de ces milieux, ce paramètre étant encore appelé B/A, où A et B sont les coefficients respectivement linéaire et quadratique de l'expression traduisant la loi qui relie les variations de pression et les variations de masse volumique des milieux explorés.

A cet effet l'appareil selon l'invention est caractérisé en ce que:

— le transducteur ultrasonore a une bande passante au moins égale à une octave;

— l'étage d'émission est agencé de façon que ladite fréquence prédéterminée $f_o$ soit située près de la limite inférieure de ladite bande passante mais que les composantes à la fréquence $f_1 = 2f_o$ soient exclues du spectre des signaux d'excitation;

— la deuxième voie de traitement comprend en outre un comparateur des signaux de sortie des premier et deuxième détecteurs d'enveloppe, un dérivateur de la sortie du comparateur, et un deuxième dispositif de visualisation relié à la sortie du dérivateur, le filtre passe-bande de ladite deuxième voie étant centré sur la fréquence $f_1$.

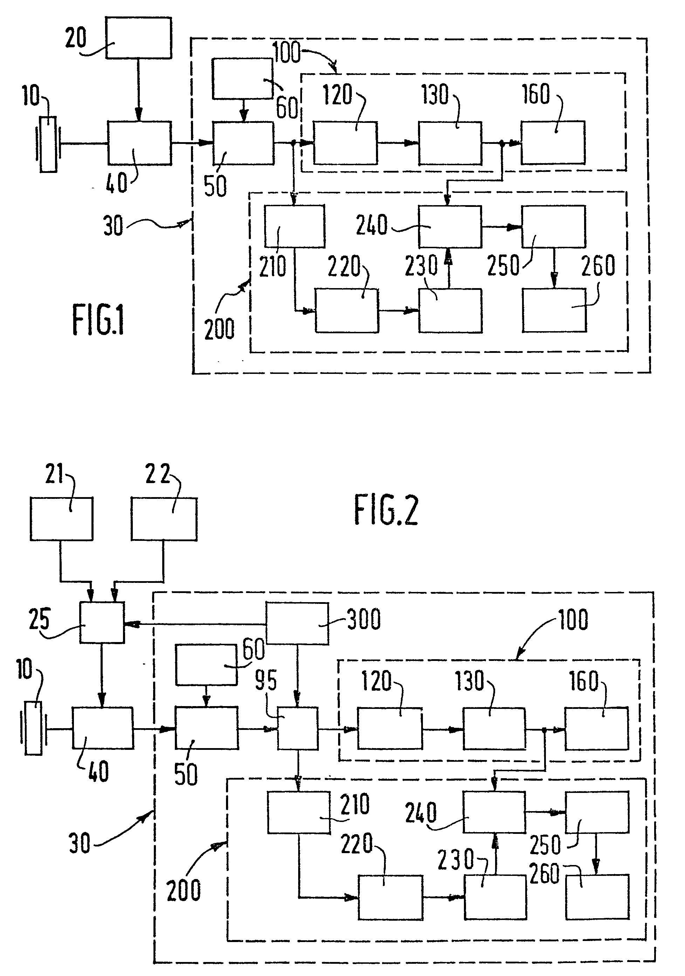

Les particularités et avantages de l'invention apparaîtront maintenant de façon plus détaillée dans la description qui suit et dans les dessins annexés, donnés à titre d'exemple et dans lequels les figures 1 et 2 montrent deux modes de réalisation de l'appareil selon l'invention.

L'appareil décrit en référence à la figure 1 comprend, dans ce premier mode de réalisation, un transducteur ultrasonore 10 émetteur et récepteur associé d'une part à un étage d'émission 20 destiné à permettre l'émission répétée (ici, périodique) d'ondes ultrasonores par le transducteur vers le milieu à examiner et d'autre part à un étage de réception et de traitement 30. Le transducteur 10 est ici un transducteur piézoélectrique comprenant une céramique qui résonne à la fréquence $f_R$ voisine de $3f_o/2$ ($f_o$ étant la fréquence du signal d'émission délivré par l'étage 20) et qui est muni de couches d'adaptation. Ces couches d'adaptation sont réalisées de telle sorte que le rendement énergétique du transducteur 10 soit alors satisfaisant à la fois à la fréquence $f_o$ et à la fréquence $f_1 = 2f_o$, et que sa bande passante soit donc au moins égale à cette bande de fréquence $f_o$ à $f_1$. On utilise par exemple deux couches d'adaptation quart d'onde d'impédances respectives 7 à $11 \times 10^6$ kg.m$^{-2}$.s$^{-1}$ et 2 à $5 \times 10^6$ kg.m$^{-2}$.s$^{-1}$, associées à un matériau piézoélectrique de type PZT, d'impédance voisine de 30 MRayls (1 Rayl $= 1$ kg.m$^{-2}$.s$^{-1}$), et à un milieu arrière léger et absorbant, d'impédance comprise entre 0 et environ $3 \times 10^6$ kg.m$^{-2}$.s$^{-1}$.

L'étage d'émission 20 assure de façon traditionnelle l'émission des ondes ultrasonores, à cette exception près que le spectre du signal d'émission ne doit pas contenir la fréquence $f_1 = 2f_o$; pour qu'il en soit aisni, on peut notamment incorporer à cet étage un filtre coupe-bande à bande étroite centrée sur ladite fréquence $2f_o$. L'étage de réception et de traitement 30 comprend d'abord un amplificateur 50 recevant du transducteur 10 les signaux électriques correspondant aux échos ultrasonores reçus par ce transducteur. Cet amplificateur est associé à un circuit 60 de contrôle automatique de gain qui augmente en fonction du temps le gain dudit amplificateur pour compenser l'effet croissant d'atténuation des ondes ultrasonores au cours de leur propagation. Un circuit d'interface 40 peut être prévu entre le transducteur 10 et les étages 20 et 30 pour relier sélectivement l'un ou l'autre des ces étages au transducteur et éviter ainsi, surtout, l'aveuglement de l'étage de réception par l'étage d'émission.

L'étage de réception et de traitement 30 comprend également, en sortie de l'amplificateur 50, deux voies de traitement en parallèle 100 et 200, dont la première, voie de traitement traditionnelle, comprend successivement un premier détecteur d'enveloppe, composé d'un premier redresseur 120 et d'un premier filtre passe-bas 130, et un premier dispositif de visualisation 160, et dont la seconde comprend successivement un filtre passe-bande 210 centré sur la fréquence $f_1$, un deuxième redresseur 220, un deuxième filtre passe-bas 230, un comparateur 240 de la sortie des filtres passe-bas 130 et 230, un dérivateur 250, et un deuxième dispositif de visualisation 260. Les deux dispositifs de visualisation 160 et 260 peuvent bien entendu être remplacés par un seul qui disposerait de deux écrans distincts, les deux écrans pouvant dans tous les cas être pilotés de façon indépendante ou simultanée.

Comme on l'a précisé plus haut, il est connu, notamment du document «Finite amplitude method for the determination of the acoustic nonlinearity parameter B/A», W.N. Cobb, Journal of Acoustical Society of America, 73(5), mai 1983, p. 1525–1531, que le paramètre B/A, mesure de la non-linéarité dans la relation entre pression acoustique et densité dans un fluide, évolue comme le terme quadratique de cette relation. Il en résulte qu'une dérivation dans le cadre de ladite relation reflète de façon linéaire, et donc aisément accessible, l'évolution du paramètre B/A. C'est la deuxième voie de traitement 200 qui permet l'accès à une image traduisant cette évolution. En effet, lors de la traversée du milieu étudié, le train d'onde émis à une fréquence prédéterminée génère en chaque point une onde de fréquence double dans la même direction, et qui est fonction de la valeur du coefficient B/A en ce point. Les tissus biologiques étant supposés non dispersifs, la vitesse de propagation des ondes de fréquence double est la même que celle du train d'onde initial. De ce fait, le signal échographique obtenu à partir des ondes de fréquence double peut être comparé, à l'aide du comparateur 240, au signal échographique initial. Le résultat de cette comparaison, qui est suivie d'une dérivation permettant l'estimation du paramètre local, reflète l'évolution du paramètre B/A. Les images fournies respectivement par la première voie traditionnelle 100 et par la deuxième voie 200 sont dans le cas présent des échographies de type A (représentation d'amplitudes en ordonnée en fonction du temps en abscisse), mais on peut prévoir également que le transducteur 10 est déplaçable, pour permettre l'obtention d'échographies de type B.

La figure 2 représente un deuxième mode de réalisation dont les éléments identiques à ceux du premier mode de réalisation portent les mêmes références que sur la figure 1. L'étage d'émission comprend un circuit de sélection de signaux d'émission 25 aux entrées duquel sont reliés en parallèle deux générateurs 21 et 22. Le premier générateur 21 est un générateur traditionnel de signaux d'excitation du transducteur les plus brefs possible pour améliorer la résolution axiale. Le deuxième générateur 22 est spécialisé pour la mesure de B/A et fournit des signaux d'excitation qui consistent en plusieurs sinusoïdes de fréquence $f_0$. L'étage de réception comprend, lui, entre le circuit 50, 60 d'amplification et de contrôle de gain et les voies de traitement 100 et 200, un circuit de sélection de traitement 95 aux sorties duquel sont reliées en parallèle les deux voies de traitement. Ces circuits de sélection 25 et 95 sont commandés simultanément par un circuit d'horloge 300 pour assurer le synchronisme des sélections soit du générateur 21 et de la première voie 100, soit du générateur 22 et des deux voies 100 et 200.

Bien entendu, la présente invention n'est pas limitée aux exemples de réalisation qui viennent d'être décrits et à partir desquels des variantes peuvent être proposées sans pour cela sortir du cadre de ladite invention. Il est à noter, par exemple, que dans le cas d'un dispositif de visualisation à deux écrans, ces deux écrans peuvent être pilotés soit de façon indépendante, soit simultanément. On peut aussi n'utiliser qu'un dispositif de visualisation, à écran unique, donnant des images en couleur et piloté à cet effet au point de vue luminance par le signal de sortie de la première voie 100 et au point de vue chrominance par celui de la deuxième voie 200.

**Revendications**

1. Appareil d'exploration de milieux et notamment de tissus biologiques par échographie ultrasonore, comprenant:

(a) un transducteur ultrasonore (10) destiné à émettre des signaux ultrasonores en réponse à des signaux d'excitation dudit transducteur et à recevoir les échos ultrasonores engendrés par les obstacles recontrés par lesdits signaux ultrasonores dans leur direction de propagation;

(b) un étage (20; 21, 22, 25) d'émission répétée desdits signaux d'excitation, le spectre de ces signaux comprenant une fréquence prédéterminée $f_0$;

(c) un étage (30) de réception et de traitement des signaux de sortie électriques du transducteur engendrés par celui-ci en réponse aux échos ultrasonores reçus, ledit étage comprenant:

(i) un circuit (50, 60) d'amplification et de contrôle de gain placé en sortie du transducteur ultrasonore (10);

(ii) en sortie dudit circuit, une première voie de traitement (100) comprenant elle-même un premier détecteur d'enveloppe (120, 130) et un premier dispositif de visualisation (160);

(iii) également en sortie dudit circuit, une deuxième voie de traitement(200) comprenant elle-même un filtre passe-bande (210) et un deuxième détecteur d'enveloppe (220, 230);

ledit appareil étant caractérisé en ce que:

— le transducteur ultrasonore (10) a une bande passante au moins égale à une octave;

— l'étage d'émission (20; 21, 22, 25) est agencé de façon que ladite fréquence prédéterminée $f_0$ soit située près de la limite inférieure de ladite bande passante mais que les composantes à la fréquence $f_1 = 2f_0$ soient exclues du spectre des signaux d'excitation;

— la deuxième voie de traitement (200) comprend en outre un comparateur (240) des signaux de sortie des premier et deuxième détecteurs d'enveloppe, un dérivateur (250) de la sortie du comparateur, et un deuxième dispositif de visualisation (260) relié à la sortie du dérivateur, le filtre passebande (210) de ladite deuxième voie étant centré sur la fréquence $f_1$.

2. Appareil selon la revendication 1, caractérisé en ce que les dispositifs de visualisation (160, 260) sont des écrans distincts associés respectivement à l'une et à l'autre des deux voies de traitement (100, 200) et pilotés simultanément.

3. Appareil selon la revendication 1, caractérisé en ce que l'étage d'émission comprend un circuit de sélection de signaux d'émission (25) aux entrées duquel sont reliés en parallèle, pour l'excitation du transducteur ultrasonore (10), un générateur traditionnel (21) de brefs signaux d'excitation du transducteur et un générateur (22) spécialisé pour la mesure de B/A et émettant à cet effet des signaux d'excitation consistant au contraire en plusieurs sinusoïdes de fréquence $f_0$, en ce que l'étage de réception et de traitement (30) comprend, entre le circuit (50, 60) d'amplification et de contrôle de gain et les voies de traitement (100, 200), un circuit de sélection de traitement (95) aux sorties duquel sont reliées en parallèle ces deux voies de traitement, et en ce que ces circuits de sélection (25, 95) sont commandés simultanément par un circuit d'horloge (300) pour assurer le synchronisme desdites sélections.

4. Appareil selon l'une des revendications 1 et 3, caractérisé en ce que les dispositifs de visualisation (160, 260) sont des écrans distincts pilotés respectivement par l'une et l'autre des deux voies de traitement (100, 200).

5. Appareil selon l'une des revendications 1 et 3, caractérisé en ce que les dispositifs de visualisation (160, 260) sont regroupés en un même et unique écran d'un dispositif de visualisation en couleurs piloté au point de vue luminance et chrominance respectivement par les première et deuxième voies de traitement (100, 200).

**Patentansprüche**

1. Gerät zur Untersuchung von Medien und insbesondere von biologischen Geweben durch Ultraschallechografie, mit:

(a) einem Ultraschallwandler (10) zum Aussenden von Ultraschallsignalen in Beantwortung von diesen Wandler anregenden Signalen und zum Empfangen der Ultraschallechos, die an den Hindernissen entstehen, die die Ultraschallsignale in ihrer Fortpflanzungsrichtung auf ihrem Weg finden,

(b) eine Stufe (20; 21, 22, 25) zum wiederholten Aussenden der Anregungssignale, wobei das Spektrum dieser Signale eine vorgegebene Frequenz $f_0$ enthält,

(c) eine Stufe (30) für den Empfang und die Behandlung der vom Wandler in Beantwortung der empfangenen Ultraschallechos erzeugten elektrischen Ausgangssignale mit:

(i) einer Schaltung zur Verstärkung und Verstärkungsgradregelung (50, 60) am Ausgang des Ultraschallwandlers (10),

(ii) einem ersten Behandlungsweg (100) am Ausgang dieser Schaltung, welcher Weg einen ersten Umhüllungsdetektor (120, 130) und eine erste Visualisierungseinrichtung (160) enthält,

(iii) einem zweiten Behandlungsweg (200) gleichfalls am Ausgang dieser Schaltung welcher Weg ein Bandpassfilter (210) und einen zweiten Umhüllungsdetektor (220, 230) enthält, dadurch gekennzeichnet, dass

– der Ultraschallwandler (10) ein Durchlassband wenigstens gleich einer Oktave aufweist,

– die Sendestufe (20; 21, 22, 25) derart ausgelegt ist, dass die vorgegebene Frequenz $f_0$ sich nahe bei der unteren Grenze des Durchlassbandes befindet, aber dass die Komponenten zur Frequenz $f_1 = 2f_0$ vom Spektrum der Anregungssignale ausgeschlossen sind,

– der zweite Behandlungsweg (200) ausserdem einen Komparator (240) für die Ausgangssignale des ersten und des zweiten Umhüllungsdetektors, ein Differenzierglied (250) für das Komparatorausgangssignal und eine zweite Visualisierungseinrichtung (260) enthält, die mit dem Ausgang des Differenzierglieds verbunden ist, wobei das Bandfilter (210) des zweiten Weges auf die Frequenz $f_1$ zentriert ist.

2. Gerät nach Anspruch 1, dadurch gekennzeichnet, dass die Visualisierungseinrichtungen (160, 260) unterschiedene Schirme sind, die dem einen bzw. dem anderen der beiden Behandlungswege (100, 200) zugeordnet sind und gleichzeitig gesteuert werden.

3. Gerät nach Anspruch 1, dadurch gekennzeichnet, dass die Sendestufe eine Sendesignalwählschaltung (25) enthält, an deren Eingänge zum Anregen des Ultraschallwandlers (10) in Parallelschaltung ein herkömmlicher Geber (21) für kurze Wandleranregungssignale und ein Geber (22) insbesondere zum Messen von B/A angeschlossen sind, der dazu Anregungssignale ausgibt, die dagegen aus mehreren Sinuswellen der Frequenz $f_0$ bestehen, dass die Empfangs- und Behandlungsstufe (30) zwischen der Schaltung zur Verstärkung und Verstärkungsgradreglung (50, 60) und den Behandlungswegen (100, 200) eine Behandlungswählschaltung (95) enthält, an deren Ausgänge in Parallelschaltung diese beiden Behandlungswege angeschlossen sind, und dass diese Wählschaltungen (25, 95) zur Gewährleistung der Synchronisation dieser Wählvorgänge gleichzeitig von einer Taktschaltung (300) gesteuert werden.

4. Gerät nach einem der Ansprüche 1 und 3, dadurch gekennzeichnet, dass die Visualisierungseinrichtungen (160, 260) unterschiedene Schirme sind, die vom einen bzw. vom anderen der beiden Behandlungswege (100, 200) gesteuert werden.

5. Gerät nach einem der Ansprüche 1 und 3, dadurch gekennzeichnet, dass die Visualisierungseinrichtungen (160, 260) zu einem und demselben Schirm einer Farbvisualisierungseinrichtung umgruppiert sind, die hinsichtig der Helligkeit und Leuchtdichte vom ersten bzw. vom zweiten Behandlungsweg (100, 200) gesteuert wird.

## Claims

1. An apparatus for the investigation of media, notably biological tissues, by ultrasonic echography, comprising:

(a) an ultrasonic transducer (10) which serves to transmit ultrasonic signals in response to excitation signals for said transducer and to receive the ultrasonic echoes generated by the obstacles encountered by said ultrasonic signals in their propagation direction;

(b) a stage (20; 21, 22, 25) for the repeated transmission of said excitation signals, the spectrum of these signals containing a predetermined frequency $f_0$;

(c) a stage (30) for receiving and processing the electric output signals of the transducer which are generated thereby in response to the ultrasonic echoes received, which stage comprises:

(i) an amplifier and gain control circuit (50, 60) which is connected to the output of the ultrasonic transducer (10);

(ii) a first processing channel (100) which is connected to the output of said circuit and which itself comprises a first envelope detector (120, 130) and a first display device (160);

(iii) a second processing channel (200) which is also connected to the output of said circuit and which itself comprises a bandpass filter (210) and a second envelope detector (220, 230);

which apparatus is characterized in that:

– the ultrasonic transducer (10) has a passband which is at least equal to one octave;

– the transmitter stage (20; 21, 22, 25) is controlled so that said predetermined frequency $f_0$ is situated near the lower limit of said passband but that the components of the frequency $f_1 = 2f_0$ are excluded from the spectrum of the excitation signals;

– the second processing channel (200) also comprises a comparator (240) for the output signals of the first and the second envelope detector, a differentiator (250) for the output signal of the comparator, and a second display device (260) which is connected to the output of the differentiator, the bandpass filter (210) of said second channel being centered around the frequency $f_1$.

2. An apparatus as claimed in Claim 1, characterized in that the display devices (160, 260) are separate screens which are individually connected to the two processing channels (100, 200) and which are simultaneously controlled.

3. An apparatus as claimed in Claim 1, characterized in that the transmitter stage comprises a selection circuit (25) for the transmission signals, to the inputs of which there are connected in parallel, for the purpose of excitation of the ultrasonic transducer (10), a conventional generator (21) for short excitation signals for the transducer and a special generator (22) for the measurement of B/A which transmits for this purpose excitation signals which, however, consist of several sine-wave periods of the frequency $f_0$, in that the receiving and processing stage (30) comprises, connected between the amplifier and gain control circuit (50, 60) and the processing channels (100, 200) a processing selection circuit (95), said two processing channels being connected in parallel to the outputs thereof, and in that these selection circuits (25, 95) are simultaneously controlled by a clock circuit (300) in order to synchronise said selections.

4. An apparatus as claimed in one of the Claims 1 and 3, characterized in that the display devices (160, 260) are separate screens which are individually controlled by a respective one of the two processing channels (100, 200).

5. An apparatus as claimed in one of the Claims 1 and 3, characterized in that the display devices (160, 260) are combined in a single screen of a colour display device which is controlled as regards luminance and chrominance by the first and the second processing channel (100, 200), respectively.

FIG.1

FIG.2